Europäisches Patentamt

European Patent Office

Office européen des brevets

(11) Publication number: **0 146 629**
**B1**

# EUROPEAN PATENT SPECIFICATION

(45) Date of publication of patent specification: **04.04.90**

(21) Application number: **84901810.6**

(22) Date of filing: **04.05.84**

(86) International application number:
**PCT/JP84/00229**

(87) International publication number:
**WO 84/04719 06.12.84 Gazette 84/28**

(51) Int. Cl.⁵: **B 23 Q 35/00**

(54) **APPARATUS FOR CONTROLLING PROFILING.**

(30) Priority: **25.05.83 JP 92023/83**

(43) Date of publication of application:
**03.07.85 Bulletin 85/27**

(45) Publication of the grant of the patent:
**04.04.90 Bulletin 90/14**

(84) Designated Contracting States:
**DE FR GB**

(56) References cited:
**EP-A- 036 914**
**AT-B- 311 151**
**JP-A-5 554 160**

(73) Proprietor: **FANUC LTD**
**3580, Shibokusa Aza-Komanba Oshino-mura**
**Minamitsuru-gun Yamanashi 401-05 (JP)**

(72) Inventor: **YAMAZAKI, Etuo**
**566-93, Shimoongata-cho**
**Hachioji-shi Tokyo 192-01 (JP)**
Inventor: **MATSUURA, Hitoshi**
**412-7, Midori-cho**
**Hachioji-shi**
**Keio-Yamada-Mansion 1-406**
**Tokyo 192 (JP)**

(74) Representative: **Billington, Lawrence Emlyn**
**et al**
**HASELTINE LAKE & CO Hazlitt House**
**28 Southampton Buildings Chancery Lane**
**London WC2A 1AT (GB)**

Courier Press, Leamington Spa, England.

# Description

The present invention relates to improvement in or relating to tracer control equipment.

In tracer control equipment of the type that performs tracer control through computing the tracing direction and the tracing speed on the basis of a deflection which is detected by a tracer head tracing the surface of a model, it is customary to employ different nominal deflections for rough and finish machining, thereby reducing the cutting time and raising the cutting accuracy.

The conventional tracer control equipment carries out such a change of the nominal deflection for example, in the following manner. That is, nominal deflections for rough and finish machining are prestored in a memory and selectively used therefor. But this prior art example has the defect of involving such a cumbersome operation that when it is desired to change the nominal deflection according to the cutting state during tracing, it is necessary to stop the tracing and to rewrite the nominal deflection stored in the memory.

One such prior art example is provided by JP—A—55/54160, and EP—A—036 914 describes tracer control equipment by which a tracer head, which is fed together with a cutter for cutting a workpiece, is driven on the surface of a model relative thereto so that a deflection detected by the tracer head tracing the model surface may become equal to nominal deflection, the equipment comprising a memory having stored therein the nominal deflection, setting means for setting the nominal deflection, trace-calculating means for calculating the tracing speed and tracing direction of the tracer head relative to the model which make the nominal deflection and the deflection detected by the tracer head equal to each other, and drive means for driving the model and the tracer head relative to each other in accordance with the result of calculation by the trace-calculating means.

The present invention is intended to overcome the above-said defect, and has for its object allowing ease in changing the nominal deflection.

According to the present invention said memory prestores a plurality of nominal deflections and at the start of tracing said setting means sets in an execution area of the data memory one of said nominal deflections which is specified by a control program, and a correction setting circuit is provided operable to set manually a correction for the specified nominal deflection which is added thereto during tracing and can be altered by operation of the correction setting circuit without interrupting tracing.

For a better understanding of the present invention and to show how it may be put into effect, reference will now be made by way of example to the accompanying drawings in which:

Fig. 1 is a diagram showing a simplified arrangement of the present invention;

Fig. 2 is a block diagram illustrating a detailed embodiment of the present invention; and

Fig. 3 is a flowchart showing the operation of a processing unit 18 of Fig. 2.

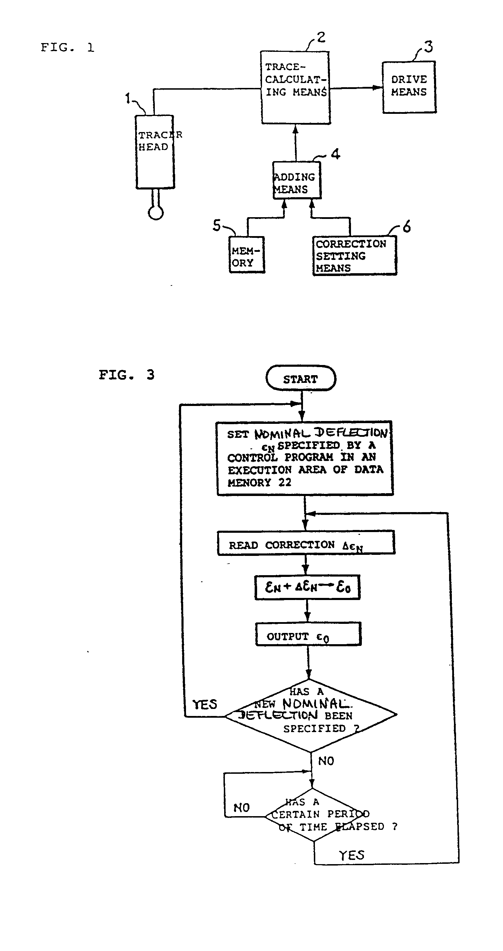

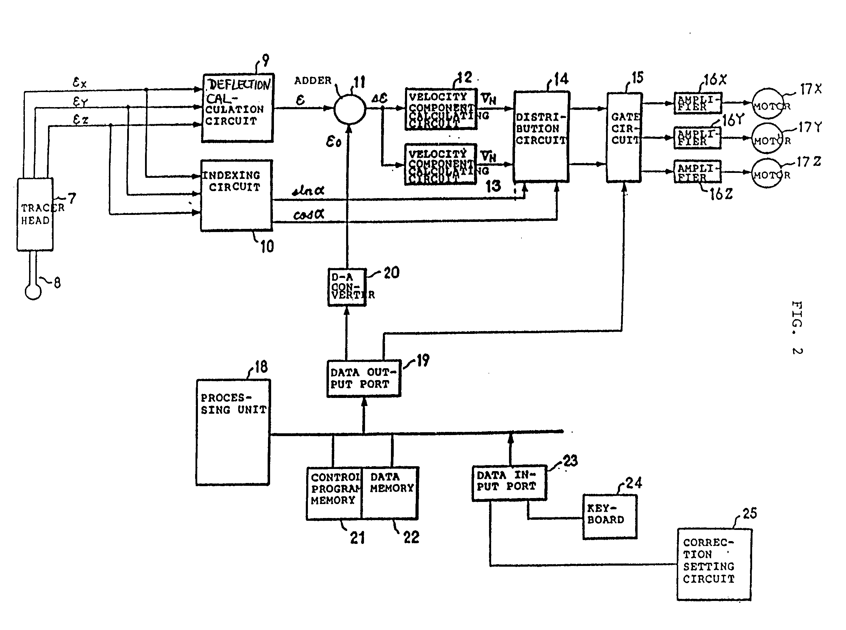

The arrangement shown in Fig. 1 comprises a trace-calculating means 2 which calculates such a tracing speed and a tracing direction that a deflection detected by a tracer head 1 tracing the surface of a model, and a nominal deflection provided from adding means 4 may become equal to each other. Drive means 3 moves the tracer head 1 and the model relative to each other on the basis of the result of calculation by the trace-calculating means 2. The adding means 4 adds together a nominal deflection stored in a memory 5 and a correction set by correction setting means 6, and applies the added output to the trace-calculating means 2. Accordingly, the nominal deflection can easily be changed.

Fig. 2 is a block diagram illustrating in detail an embodiment of the present invention. Reference numeral 7 indicates a tracer head, 8 a stylus, 9 a deflection calculation circuit, 10 an indexing circuit, 11 an adder, 12 and 13 velocity component calculating circuits, 14 a distribution circuit, 15 a gate circuit, 16X, 16Y and 16Z amplifiers, 17X, 17Y and 17Z motors, 18 a processing unit formed by a microprocessor or the like, 19 a data output port, 20 a D-A converter, 21 a control program memory, 22 a data memory, 23 a data input port, 24 a keyboard and 25 a correction setting circuit.

The deflection calculation circuit 9 produces a composite deflection

$$\varepsilon = \sqrt{\varepsilon_x^2 + \varepsilon_y^2 + \varepsilon_z^2},$$

based on deflections $\varepsilon_x$, $\varepsilon_y$ and $\varepsilon_z$ of the stylus 8 in the X-, Y- and Z-axis directions detected by the tracer head 7, and the indexing circuit 10 yields deflection-direction signals $\sin\alpha$ and $\cos\alpha$. The adder 11 obtains a difference $\Delta\varepsilon$ between the composite deflection $\varepsilon$ from the deflection calculation circuit 9 and a nominal deflection $\varepsilon_0$ provided via the D-A converter 20, and provides the difference to the velocity component calculating circuits 12 and 13. Based on the abovesaid difference $\Delta\varepsilon$, the velocity component calculating circuits 12 and 13 produce a normal velocity $V_N$ and a tangential velocity $V_T$, respectively, and based on these velocities and the deflection-direction signals $\sin\alpha$ and $\cos\alpha$, the distribution circuit 14 yields a velocity command signal. The velocity command signal is applied to the amplifier which is selected by the gate circuit 15, and the amplified output drives the corresponding motor, bodily feeding a cutter (not shown) and the stylus 8. Since the above-described operation is well-known, no further detailed description thereof will be given.

The tracing operation is carried out in the manner described above. In the case where it is desired to change the nominal deflection according to the cutting state during tracing, this embodiment changes the nominal deflection following the flowchart shown in Fig. 3. A description will be given, with reference to Fig. 3, of the operation of this embodiment.

The data memory 22 has prestored therein n nominal deflections $\varepsilon_N$ (N=1, 2, . . . n), and when commanded to start tracing, the processing unit 18 sets in an execution area of the data memory 22 the nominal deflection $\varepsilon_N$ specified by a control program stored in the control program memory 21. (In this case, let it be assumed that the nominal deflection $\varepsilon_1$ has been specified), and then it reads thereinto via the data input port 23 a correction $\Delta\varepsilon_N$ set in the correction setting circuit 25. (In this case, let it be assumed that a correction $\Delta\varepsilon_1$ has been set). The correction setting circuit 25 is one that is able to set an arbitrary correction by dialling, for instance. Next, the processing unit 18 adds together the nominal deflection $\varepsilon_1$ set in the execution area of the data memory 22 and the correction $\Delta\varepsilon_1$ read out of the correction setting circuit 25, and provides the result of addition, $\varepsilon_0=\varepsilon_1+\varepsilon_1$, to the adder 11 via the data output port 19 and the D-A converter 20.

Next, the processing unit 18 judges whether a new nominal deflection $\varepsilon_N$ has been specified by the control program. When judging that no new nominal deflection has been specified, the processing unit 18 reads thereinto, a certain period of time after outputting the abovesaid result of addition, $\varepsilon_0=\varepsilon_1+\Delta\varepsilon_1$, the correction set in the correction setting circuit 25 (in this case, let it be assumed that a correction $\Delta\varepsilon_1'$ has been set) and computes and outputs $\varepsilon_0=\varepsilon_1+\Delta\varepsilon_1'$. When judging that a new nominal deflection $\varepsilon_N$ has been specified (in this case, let it be assumed that the nominal deflection $\varepsilon_2$ has been specified), the processing unit 18 sets the newly specified nominal deflection $\varepsilon_2$ in the execution area of the data memory 22, thereafter performing the same processing as described above.

As described above, this embodiment adds together the nominal deflection stored in the data memory 22 and the correction set in the correction setting circuit 25 and provides the result of addition, as a nominal deflection signal, to the adder 11, and hence it permits an easy change of the nominal deflection according to the cutting state.

As has been described in the foregoing, since the present invention is provided with a memory having stored therein a nominal deflection, correction setting circuit for setting a correction and adding means for adding together the nominal deflection stored in the memory and the correction set by the correction setting means, the invention possesses the advantage of facilitating a change of the nominal deflection according to the cutting state.

## Claim

Tracer control equipment by which a tracer head (7), which is fed together with a cutter for cutting a workpiece, is driven on the surface of a model relative thereto so that a deflection ($\varepsilon$) detected by the tracer head (7) tracing the model surface may become equal to a nominal deflection ($\varepsilon_0$), the equipment comprising a memory (22) having stored therein the nominal deflection ($\varepsilon_0$), setting means (18) for setting the nominal deflection trace-calculating means (9, 10, 11, 12, 13, 14) for calculating the tracing speed and tracing direction of the tracer head relative to the model which make the nominal deflection ($\varepsilon_0$) and the deflection ($\varepsilon$) detected by the tracer head (7) equal to each other, and drive means (16X, 16Y, 16Z, 17X, 17Y, 17Z) for driving the model and the tracer head (7) relative to each other in accordance with the result of calculation by the trace-calculating means (9, 10, 11, 12, 13, 14), characterised in that said memory (22) prestores a plurality of nominal deflections ($\varepsilon_N$) and at the start of tracing said setting means (18) sets in an execution area of the data memory (22) one of said nominal deflections ($\varepsilon_N$) which is specified by a control program, and in that a correction setting circuit (25) is provided operable to set manually a correction ($\Delta\varepsilon$) for the specified nominal deflection which is added thereto during tracing and can be altered by operation of the correction setting circuit (25) without interrupting tracing.

## Patentanspruch

Fühlfinger-Steuereinrichtung, durch die ein Fühlfingerkopf (7), der zusammen mit einem Schneidwerkzeug zum zerspanenden Bearbeiten eines Werkstücks vorbewegt wird, auf der Oberfläche eines Modells derart relativ zu dieser getrieben wird, daß eine Ablenkung ($\varepsilon$), die durch den Fühlfingerkopf (7) erfaßt ist, der die Modeloberfläche abfühlt, gleich einer Nominalablenkung ($\varepsilon_0$) wird, wobei die Einrichtung umfaßt: einen Speicher (22), der in sich gespeichert die Nominalablenkung ($\varepsilon_0$) enthält, ein Setzmittel (18) zum Setzen der Nominalablenkung, Abfühl-Berechnungsmittel (9, 10, 11, 12, 13, 14) zum Berechnen der Abfühlgeschwindigkeit und der Abfühlrichtung des Fühlfingerkopfes relativ zu dem Modell, die die Nominalablenkung ($\varepsilon_0$) und die Ablenkung ($\varepsilon$), welche durch den Fühlfingerkopf (7) erfaßt wird, einander gleich machen, und Treibermittel (16X, 16Y, 16Z, 17X, 17Y, 17Z) zum Treiben des Modells und des Fühlfingerkopfes (7) relativ zueinander entsprechend dem Ergebnis der Berechnung durch die Abfühl-Berechnungsmittel (9, 10, 11, 12, 13, 14), dadurch gekennzeichnet, daß der Speicher (22) eine Vielzahl von Nominalablenkungen ($\varepsilon_N$) vorab speichert und das Setzmittel (18) bei Beginn des Abfühlvorgangs in einem Arbeitsbereich des Daten-Speichers (22) eine der Nominalablenkungen ($\varepsilon_N$) setzt, die durch ein Steuerprogramm spezifiziert ist, und daß eine Korrektursetzschaltung (25) vorgesehen ist, die betreibbar ist, um manuell eine Korrektur ($\Delta\varepsilon$) für die spezifizierte Nominalablenkung zu setzen, welche während des Abfühlvorgangs dazu addiert wird und durch Betätigung der Korrektursetzschaltung ohne Unterbrechung des Abfühlvorgangs geändert werden kann.

**Revendication.**

Equipement de commande de copiage au moyen duquel un palpeur (7) qu'on fait avancer conjointement à un outil de coupe destiné à couper une pièce usinée, est déplacé sur la surface d'un modèle de manière qu'une déviation ($\varepsilon$) qui est détectée par le palpeur (7) balayant la surface du modèle puisse devenir égale à une déviation nominale ($\varepsilon_0$), l'équipement comprenant une mémoire (22) dans laquelle est enregistrée la déviation nominale ($\varepsilon_0$), des moyens de fixation (18) destinés à fixer la déviation nominale, des moyens de calcul de trajectoire de copiage (9, 10, 11, 12, 13, 14) qui sont destinés à calculer la vitesse de copiage et la direction de copiage du palpeur par rapport au modèle qui rendent mutuellement égales la déviation nominale ($\varepsilon_0$) et la déviation ($\varepsilon$) qui est détectée par le palpeur (7), et des moyens d'entraînement (16X, 16Y, 16Z, 17X, 17Y, 17Z) destinés à produire un déplacement relatif entre le modèle et le palpeur (7) conformément au résultat du calcul qui est effectué par les moyens de calcul de trajectoire de copiage (9, 10, 11, 12, 13, 14), caractérisé en ce qu'un ensemble de déviations nominales ($\varepsilon_N$) sont enregistrées dans la mémoire (22), et au début du copiage les moyens de fixation (18) fixent dans une zone d'exécution de la mémoire de données (22) l'une des déviations nominales ($\varepsilon_N$) qui est spécifiée par un programme de commande, et en ce qu'il existe un circuit de fixation de correction (25) qu'on peut utiliser pour fixer manuellement une correction ($\Delta\varepsilon$) pour la déviation nominale spécifiée, qui est ajoutée à cette dernière pendant le copiage et qui peut être modifiée par l'action du circuit de fixation de correction (25), sans interrompre le copiage.

FIG. 1

TRACE-CALCULATING MEANS `2`

DRIVE MEANS `3`

TRACER HEAD `1`

ADDING MEANS `4`

MEMORY `5`

CORRECTION SETTING MEANS `6`

FIG. 3

START

SET NOMINAL DEFLECTION $\epsilon_N$ SPECIFIED BY A CONTROL PROGRAM IN AN EXECUTION AREA OF DATA MEMORY 22

READ CORRECTION $\Delta\epsilon_N$

$\epsilon_N + \Delta\epsilon_N \rightarrow \epsilon_0$

OUTPUT $\epsilon_0$

HAS A NEW NOMINAL DEFLECTION BEEN SPECIFIED ?

YES

NO

HAS A CERTAIN PERIOD OF TIME ELAPSED ?

NO

YES

FIG. 2